# EUROPEAN PATENT APPLICATION

(11) **EP 1 535 811 A1**
(43) Date of publication of application: **01.06.2005**
(21) Application number: 03027246.2
(22) Date of filing: 28.11.2003
(51) Int. Cl.: B60R 22/185, B60R 22/02, A44B 11/25

(54) **Relinker arrangement for a safety belt**

(71) Applicant: Ford Global Technologies, LLC, Dearborn, MI 48126 (US)
(72) Inventor: Persson, Jörgen, 41322 Göteborg (SE); Adolfsson, Peter, 42244 Hisings Backa (SE); Sandahl, Andreas, 41660 Göteborg (SE); Forssell, Jonas, 41256 Göteborg (SE)
(74) Representative: Spitmann, Knut Hermann

(57) **Abstract**

The invention refers to a relinker arrangement (10) for relinking and clamping a safety belt (12) in a vehicle. The safety belt (12) comprises a diagonal portion (12a) and a lap portion (12b). The relinker arrangement (10) being arranged to connect said safety belt (12) to a safety belt locking tongue (11). The relinker arrangement (10) is arranged to relink at least a portion (12c) of the diagonal portion (12a) to constitute the lap portion (12b) in a first direction of movement (α) of said safety belt (12), and relink at least a portion (12d) of the lap portion (12b) to constitute the diagonal portion (12a) in a second direction of movement (β) of said safety belt (12). The relinker arrangement (10) is arranged to clamp said safety belt (12) in one of said first or second directions of movement (α, β) of the safety belt (12). The invention also relates to a safety belt arrangement comprising such a relinker arrangement.

## Description

The invention refers to a relinker arrangement for relinking and clamping a safety belt in a vehicle. The safety belt comprises a diagonal portion and a lap portion. The relinker arrangement is arranged to connect said safety belt to a safety belt locking tongue. The relinker arrangement is arranged to relink at least a portion of the diagonal portion to constitute the lap portion in a first direction of movement of said safety belt, and relink at least a portion of the lap portion to constitute the diagonal portion in a second direction of movement of said safety belt. The invention also relates to a safety belt arrangement comprising such a relinker arrangement.

### BACKGROUND OF THE INVENTION

In many countries in the western world, the driver and the passengers in vehicles frequently use safety belts during driving. Generally, this is common due to safety aspects and law requirements and is not described any further hereinafter.

In the-present-day-situation conventional vehicles are generally equipped with so-called three point safety belts for the passengers. The three point safety belt comprises a lap portion and a diagonal portion. The lap portion extends from one side of the seat, where it is fixedly mounted to the seat or the vehicle body, toward a relinker through which the safety belt is relinked. Thereafter the diagonal portion extends from the relinker toward the safety belt retractor, which is generally located in or adjacent the mentioned B and C pillars.

For the sake of clarity, the relinker relinks some parts of the safety belt between constituting the lap portion or the diagonal portion. The relinker is constituted of a loop or the like, through which the safety belt runs. Thus, it is understood that the relinker defines the lap portion from the diagonal portion of the safety belt. In practise, the relinking of the safety belt generally occurs when the safety belt user buckles or unbuckles himself before driving or after the driving is concluded.

The relinker itself, and particularly a loop thereof, is connected to the lap and diagonal portions of the safety belt in the described way. In the other end the relinker is connected to a locking tongue or a so-called latch. The locking tongue is in turn coupled to a safety belt buckle when the safety belt user is buckled, whereby the safety belt is then tightened around the safety belt user.

When the safety belt user is buckled, the lap portion is stretched over the hipbones and the lower area of the stomach of the safety belt user in the direction from one side of the seat toward the locking tongue on the other side of the seat. The diagonal portion is then diagonally stretched over the stomach, the chest and one of the shoulders of the safety belt user in the direction from the locking tongue toward the safety belt retractor, wherein the safety belt is completely retracted when the safety belt is not in use.

In operation the described stretching and tightening capacity of the safety belt is provided by means of a spring arrangement, which is a functionality provided inside the safety belt retractor. Furthermore, the locking tongue is located near the B and C pillars when the driver or passengers doesn't use the safety belt since the safety belt is then retracted into the safety belt retractor by means of the spring arrangement.

In regular operation the relinker relinks the safety belt between constituting the lap portion and/or the diagonal portion of the safety belt as mentioned above. This relinking mechanism particularly operates when the safety belt user buckles or unbuckles himself before driving or after the driving is concluded.

There is a risk that the lap portion slides upwards toward the diaphragm area of the stomach when the safety belt user is buckled. It is desirable that the lap portion remains around the hipbones since they can receive a greater amount of forces than for instance the diaphragm area of the stomach, which internal organs instead can acquire considerable injuries at an accident.

At an accident, after a sensor which releases at least one of the airbags of the vehicle has been activated, a pretensioner functionality is activated. Then the safety belt is firstly even more tightened around the safety belt user since the safety belt is retracted into the safety belt retractor. After a while the safety belt user strives to move in a forward direction due to the retardation of the vehicle, i.e. in the direction of travel of the vehicle. Secondly, the safety belt is then gradually released from the safety belt retractor in a well-known manner by means of the pretensioner functionality. During this course of the accident, a load limiter also prevents the safety belt user to receive too a great amount of forces. Thereby the risk for the safety belt user to receive any injuries at the accident is minimised.

As the safety belt is gradually released from the safety belt retractor, and the safety belt user moves in a forward direction during the retardation phase, the hips and the behind portion of the safety belt user strive to move in a forward direction of the vehicle. Therefore the length of the lap portion of the safety belt can be extended, particularly as the safety belt is gradually released by the pretensioner function at the same time. Therefore there is a risk that the lap portion slides in an upward direction toward the diaphragm area of the stomach of the safety belt user.

### SUMMARY OF THE INVENTION

It is therefore an object of the present invention to provide a relinker arrangement for relinking and clamping a safety belt and prevent the driver and passengers in a vehicle which use the safety belt from receiving internal injuries at an incident or accident.

It is also an object to provide a relinker arrangement for preventing a lap portion of the safety belt to slide from the hipbones of the safety belt user in an upward direction towards the diaphragm area of the stomach. Particularly, it is an object to prevent the lap portion to slide during an accident.

It is a further object to provide a relinker arrangement, which operates normally in regular driving situations but particularly prevents the lap portion to slide at traffic incidents and accidents when the hipbones and the behind portion of a safety belt user strives to move in a forward direction in the retardation phase of the vehicle in the course of the accident.

These objects are achieved in accordance with the present invention by means of the relinker arrangement for relinking and clamping a safety belt in a vehicle as claimed in claim 1, and the safety belt arrangement for relinking and clamping a safety belt in a vehicle as claimed in claim 12, wherein the relinker arrangement is arranged to clamp the safety belt in one of the first or second directions of movement of the safety belt. By means of the invention, the safety belt is prevented to move in one of the first or second directions of movement. Advantageously, the lengths of the separate parts of the safety belt are not extended in this way. Thereby, the safety belt is prevented to slide.

Hereinafter, in the first direction of movement of the safety belt, a portion of the diagonal portion of the safety belt is relinked to constitute a portion of the lap portion of the safety belt. In the second direction of movement of the safety belt, a part of the lap portion of the safety belt is relinked to constitute a portion of the diagonal portion of the safety belt. Thus, there exist two directions of movement of the safety belt, whereof the first direction of movement is opposite to the second direction of movement. Moreover, the term "relink" could be replaced by "link".

The safety belt comprises a lap portion and a diagonal portion. The lap portion is tightened over the hipbones and the lower area of the stomach of a safety belt user in its extension from one side of the seat to the locking tongue when the safety belt user is buckled. The diagonal portion is then diagonally stretched over the stomach, the chest and one of the shoulders of the safety belt user in its extension from the locking tongue toward the safety belt roll inside the safety belt retractor arrangement, wherein the safety belt is retracted when the safety belt is not in use. The locking tongue or the latch, being buckled into the safety belt buckle in use, is in its other end coupled to or integrated with the relinker. The diagonal portion could also be referred to as the "chest portion".

In a first preferred embodiment of the invention, the relinker arrangement is suitably arranged to clamp the safety belt in the first direction of movement of the safety belt, in which direction the relinker is arranged to relink at least a portion of the diagonal portion to constitute the lap portion if required.
By means of the invention, the safety belt is clamped in the first direction of movement at an accident, whereby the safety belt is prevented to move in the first direction of movement at an accident. However, the relinker is then still arranged to relink the safety belt in the second direction of movement if required, in which direction the relinker is arranged to relink at least a portion of the lap portion to constitute the diagonal portion. Advantageously, the length of the lap portion is maintained, and is not extended, during an accident. By means of the invention, the lap portion is remained stretched and tightened around the hipbones of a safety belt user during the retardation phase of an accident so that the safety belt cannot slide towards the diaphragm area of the safety belt user. Thereby possible injuries of the internal organs of the safety belt user are reduced at an accident.

In the first preferred embodiment, the relinker arrangement is arranged to clamp the safety belt at a predetermined force level in the safety belt. By means of the invention, the relinker arrangement operates normally in regular working conditions. But at an accident, at which the forces in the safety belt exceed a predetermined force level, the inventive relinker arrangement is arranged to clamp the safety belt in the first direction thereof so that the lap portion is still stretched and tightened around the safety belt user, particularly when the pretensioner functionality is initiated and the safety belt is gradually released and unrolled of the safety belt roll. Advantageously, the length of the diagonal portion of the safety belt is extended in this way while the length of the lap portion is maintained, and not extended, and preferably still stretched and tightened around the safety belt user. Particularly, the forces in the safety belt reaches or even exceed a predetermined force level in the retardation phase of an accident due to the retardation of the vehicle. Advantageously, the predetermined force level defines the force level at which the relinker clamps the safety belt due to the constructive design of the relinker. Alternatively, the forces in the safety belt are measured by a component, which sends a signal to a control unit which in turn initiates a second working condition when the forces in the safety belt exceed a predetermined force level. Particularly, the predetermined force level is obtained and exceeded at the retardation course of an accident.

The relinker arrangement may be arranged to clamp said safety belt after a predefined signal of the vehicle is initiated. Preferably, the relinker arrangement is arranged to clamp the safety belt after a signal of the release of the airbag(s) of the vehicle is initiated. Alternatively, a control unit or a component sends a predefined signal to the relinker arrangement to clamp the safety belt as already mentioned above.

In the first preferred embodiment, the relinker arrangement suitably comprises the relinker and a self clamping means for clamping the safety belt. Generally, the relinker itself comprises a first member and a second member, which substantially defines a passing area of the relinker for the safety belt. Preferably, the first and the second member delimit the passing area so that the safety belt passes through the relinker in its first and second described directions of movements. Advantageously, the relinker comprises a loop, an eye, a becket or the like, constituting the passing area for a safety belt.

In the first preferred embodiment of the invention, the self clamping means is suitably constituted of a blocking means, partially blocking the passing area for the safety belt when it passes the relinker in one of the first or the second directions of movement of the safety belt.
By means of the invention, the passing area is decreased by the blocking means leading to friction between the blocking means, at least one of the first or second members and the safety belt, whereby the safety belt is finally clamped when the passing area is sufficiently decreased and the friction is sufficiently great. Preferably, the safety belt is prevented to move through the relinker in the first direction of movement at an accident. As desirable, the length of the lap portion cannot be extended. However, the safety belt is still movable in the second direction of movement.
More preferably, the blocking means is constituted of a wedge-like portion, wedging the safety belt against the relinker, whereby the safety belt is clamped.

In a second preferred embodiment of the invention, the relinker arrangement doesn't comprise a physical self clamping means. Then the second member of the relinker is positionable in a first position and in a second position in relation to the first member. When the second member is located in the first position, the safety belt moves freely in its first and second directions of movement. The force level in the safety belt positions the second member in the second position at the accident, whereby the safety belt is clamped in the first direction of movement of the safety belt. This is accomplished by means of the passing area being reduced, when the friction is sufficiently great the safety belt is clamped. If the second member is positioned in the second position in the second direction of movement the safety belt, the second member is positioned back to the first position. The safety belt is always movable in the second direction of movement of the safety belt.
In the second preferred embodiment of the invention, the self clamping means is advantageously constituted of the second position of the second member.

### BRIEF DESCRIPTION OF THE DRAWINGS

The invention will be described in the following by way of example only and with reference to the embodiments illustrated in the drawings, in which
- Fig. 1: is a principal sketch illustrating a relinker arrangement for a safety belt in a vehicle,
- Fig. 2a: is a front view of a second embodiment of the relinker of the inventive relinker arrangement,
- Fig. 2b: is a section of the second embodiment of the relinker in Fig. 2a,
- Fig. 3a: is a principal sketch illustrating a first embodiment of the relinker of the inventive relinker arrangement in a first position thereof, and
- Fig. 3b: is a principal sketch illustrating the first embodiment of the relinker in Fig. 3a in a second position thereof.

### DETAILED DESCRIPTION OF PREFERRED EMBODIMENTS

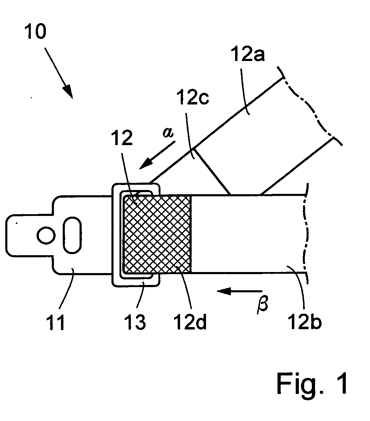

In the drawings, reference numeral 10 generally denotes a relinker arrangement for relinking and clamping a safety belt in a vehicle, which relinker arrangement is arranged in connection with a locking tongue 11 for a safety belt 12, see Fig. 1.

In the vehicle, the safety belt 12 comprises a diagonal portion 12a and a lap portion 12b. The diagonal portion 12a extends diagonally over the torso of a safety belt user such as over the stomach, the chest and one of the shoulders. The lap portion 12b extends over both the hipbones and the lower stomach area of the safety belt user.

The inventive relinking arrangement 10 is arranged to relink the safety belt 12 in a first α and in a second β direction of movement, in which first direction of movement α a portion 12c of the diagonal portion 12a is relinked to form a part of the lap portion 12b, and in which second direction of movement β a portion 12d of the lap portion 12c is relinked to form a part of the diagonal portion 12a.

In a preferred embodiment of the invention, the relinker arrangement 10 comprises a relinker 13, see Fig. 1. For clarifying, the relinker 13 defines the described lap portion 12a from the described diagonal portion 12b of the safety belt 12.

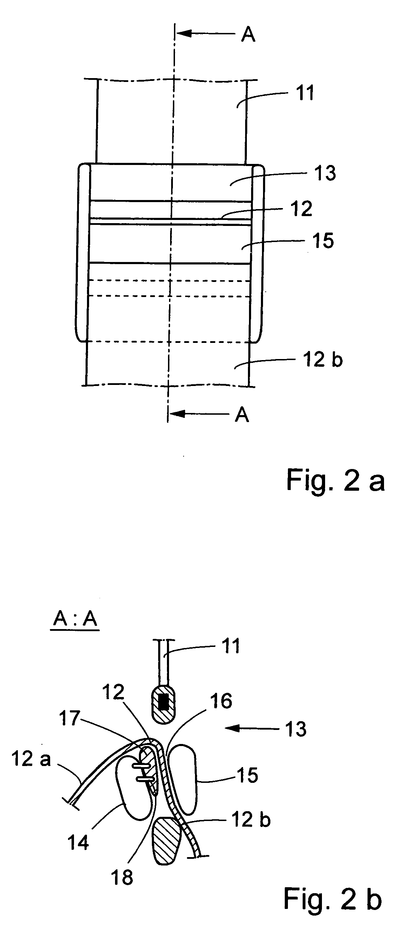

The relinker 13 comprises a first member 14 and a second member 15, which substantially define and delimit a passing area 16 through which the safety belt 12 is arranged to pass and be relinked in the described first and second directions of movement α and β of the safety belt 12 in regular operation thereof, see Figs. 2a and 2b.

In a first preferred embodiment of the invention, the relinker arrangement 10 also comprises a self clamping means 17, see Fig. 2b. The self clamping means 17 is provided for clamping the safety belt 12 when the safety belt 12 passes through the relinker 13 in the first direction of movement α at an accident. Then the safety belt 12 is arranged to still be movable through the relinker 13 in the second direction of movement β.
In greater detail, the self clamping means 17 is preferably constituted of a blocking means. The blocking means 17 is connected to the actual relinker 13 via at least one rotatable link 18. At an accident, when the safety belt 12 moves in the first direction of movement α, the safety belt 12 is arranged to affect the blocking means 17 to rotate toward the relinker 13 by means of the rotatable link 18. In this way the blocking means 17 is arranged to partially block the passing area 16 for the safety belt 12. Thereby the safety belt 12 is arranged to be clamped and thereby prevented to move in the first direction of movement α. In opposite, if the blocking means 17 clamps the safety belt 12 in the second direction of movement β of the safety belt 12, it is arranged to affect the blocking means 17 to rotate in a direction away from the relinker 13 by means of the rotatable link 18. Thereby the safety belt 12 is always movable through the relinker 13 in the second direction of movement β at accident.

Preferably, the blocking means is constituted of a wedge-like portion 17 connected to the relinker 13 by means of the rotatable link 18. The wedge like portion 17 is then arranged to wedge the safety belt 12 against the relinker 13 in the first direction of movement α of the safety belt 12. In other aspects this preferred embodiment operates in principally the same way as the described clamping means.

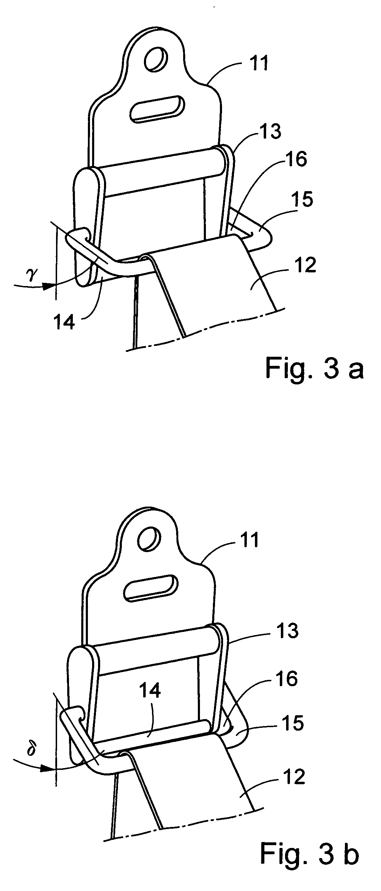

In a second preferred embodiment of the invention, the relinker 13 does not comprise a self clamping means, see Figs. 3a and 3b. Then the safety belt 12 is linked around the second member 15. The second member 15 is further positionable in a first position γ or in a second position δ in relation to the first member 14. When the second member 15 is positioned in the first position γ, the relinker arrangement 10 is arranged to relink the safety belt 12 in both the first α and the second β directions of movement. This is easily accomplished since the passing area 16 of the relinker 13 for the safety belt 12 is then sufficiently great.
The second member 15 is displaced to the second position δ when the forces in the safety belt 12 are sufficiently great, i.e. when the predetermined force level in the safety belt 12 is substantially obtained or even exceeded such as at an accident. When the second member 15 is positioned in the second position δ the passing area 16 between the first 14 and the second 15 member is decreased, whereby the safety belt 12 is arranged to be clamped between the first 14 and the second member 15 by means of the friction there between.
However, the safety belt 12 is then still arranged to be movable in the second direction of movement β since the second member 15 is arranged to be affected and displaced back to the first position γ by the safety belt 12 if the safety belt 12 moves in the second direction of movement β.
This second embodiment of the inventive relinker arrangement 10 is not described any more hereinafter.

The inventive relinker arrangement 10 operates according to the following. In regular operation (before an accident) the relinker 13 can relink the safety belt 12 in both the first and second directions of movement α and β if desired.

In a traffic incident or accident a sensor which releases the airbag is activated. If the sensor has been activated the pretensioner functionality initially retracts and rolls the safety belt 12 onto the safety belt roll inside the safety belt retractor.

In the retardation phase later on in the course of the accident, the pretensioner functionality subsequently extracts and gradually releases the safety belt 12, whereby the safety belt 12 is unrolled and unwound out of the safety belt roll. Simultaneously or before that, the relinker arrangement 10 clamps the safety belt 12. Thereby the relinker 13 cannot relink the safety belt 12 in the first direction of movement α.
In greater detail, when the forces in the safety belt 12 are sufficiently great at an accident the link 18 is affected by the safety belt 12 and thereby rotates so that the wedge-like portion 17 wedges the safety belt 12 against the relinker 13 in the first direction of movement α of the safety belt 12.

In the second direction of movement β of the safety belt 12 at an accident, if the safety belt 12 is wedged in the described way, the link 18 is affected by the safety belt 12 and rotates back to its initial position, whereby the wedge-like portion 17 doesn't wedge the safety belt 12 any more.

By means of the invention, when the safety belt 12 is clamped, the length of the lap portion 12b of the safety belt 12 remains unchanged and thereby tightened around the hipbones of the safety belt user even if the length of diagonal portion 12a is extended as the pretensioner functionality gradually extracts and loosens the safety belt 12 at the retardation phase during the course of the accident as described above.

However, if the safety belt user wish to tighten the lap portion 12b around his hips even more, so that a portion of the lap portion 12b is desired to be relinked to being the diagonal portion 12a, it is still possible by means of the inventive relinker arrangement 10 since the lap portion 12b is still movable through the relinker 13, i.e. relinkable by means of the relinker 13, in the second direction of movement β.

As already mentioned above, the relinker arrangement 10 is arranged to clamp said safety belt 12 after a predefined signal of the vehicle is initiated such as the activation or the release of the airbag (s) of the vehicle is initiated, e.g. a signal of the SRS sensor. As mentioned above, the clamping of the safety belt 12 in the first direction of movement α preferably occurs before the pretensioner functionality unrolls or extracts the safety belt 12 out of the safety belt roll.

The inventive relinker arrangement 10 can be provided to any of the safety belts provided in a conventional vehicle.

The invention has been described above and illustrated in the drawings by way of example only and the skilled person will recognise that various modifications may be made without departing from the scope of the invention as defined by the appended claims.

## Claims

1. A relinker arrangement (10) for relinking and clamping a safety belt (12) in a vehicle, the safety belt (12) comprising a diagonal portion (12a) and a lap portion (12b), the relinker arrangement (10) being arranged to connect said safety belt (12) to a safety belt locking tongue (11), the relinker arrangement (10) being arranged to relink at least a portion (12c) of the diagonal portion (12a) to constitute the lap portion (12b) in a first direction of movement (α) of said safety belt (12), and relink at least a portion (12d) of the lap portion (12b) to constitute the diagonal portion (12a) in a second direction of movement (β) of said safety belt (12),
**characterised in that** the relinker arrangement (10) is arranged to clamp said safety belt (12) in one of said first or second directions of movement (α, β) of the safety belt (12).

2. A relinker arrangement as claimed in claim 1,
**characterised in that** the relinker arrangement (10) is arranged to clamp the safety belt (12) in the first direction of movement (α) of the safety belt (12).

3. A relinker arrangement as claimed in claims 1 and 2,
**characterised in that** the relinker arrangement (10) is arranged to clamp said safety belt (12) at a predetermined force level in the safety belt (12).

4. A relinker arrangement as claimed in anyone of the preceding claims,
**characterised in that** the relinker arrangement (10) is arranged to clamp said safety belt (12) after a predefined signal of the vehicle is initiated.

5. A relinker arrangement as claimed in anyone of the preceding claims,
**characterised in that** the relinker arrangement (13) is arranged to clamp said safety belt (12) after a signal of a release of an airbag of the vehicle is initiated.

6. A relinker arrangement as claimed in anyone of the preceding claims,
**characterised in that** the relinker arrangement (10) comprises a relinker (13) and a self clamping means (8, 17) for clamping the safety belt (12) when passing the relinker (13).

7. A relinker arrangement as claimed in claim 6,
**characterised in that** the relinker (13) comprises a first member (14) and a second member (15), which substantially delimit a passing area (16) of the relinker (13) for the safety belt (12) to pass the relinker (13).

8. A relinker arrangement as claimed in claims 6 - 7,
**characterised in that** the second member (15) is positionable in a first position (γ) and in a second position (δ) in relation to the first member (13).

9. A relinker arrangement as claimed in claims 6 - 8,
**characterised in that** the second member (15) clamps the safety belt (12) against the first member (14) in one (δ) of said first or the second positions (γ, δ) in one of said first or second directions of movement (α, β) of the safety belt (12).

10. A relinker arrangement as claimed in claims 6 and 7,
**characterised in that** the self clamping means is constituted of a blocking means (17), partially blocking the passing area (16) for the safety belt (12) when passing the relinker (13) in one of the first or second direction of movements (α, β) of the safety belt (12).

11. A relinker arrangement as claimed in claims 6 - 7 and 10.
**characterised in that** the self clamping means is constituted of a wedge-like portion (17), wedging the safety belt (12) in the relinker (13) in one of the first or second directions of movements (α, β) of the safety belt (12).

12. A safety belt arrangement (10, 12) comprising a relinker arrangement (10) for relinking and clamping a safety belt (12) in a vehicle, the safety belt (12) comprising a diagonal portion (12a) and a lap portion (12b), the relinker arrangement (10) connect said safety belt (12) to a safety belt locking tongue (11), the safety belt arrangement (10, 12) relinks at least a portion (12c) of the diagonal portion (12a) to constitute the lap portion (12b) in a first direction of movement (α) of said safety belt (12), and relinks at least a portion (12d) of the lap portion (12b) to constitute the diagonal portion (12a) in a second direction of movement (β) of said safety belt (12),
**characterised in that** the safety belt arrangement (10, 12) is arranged to clamp said safety belt (12) in one of said first or second directions of movement (α, β) of the safety belt (12)
